# EUROPEAN PATENT APPLICATION

(11) **EP 2 648 351 A1**
(43) Date of publication of application: **09.10.2013**
(21) Application number: 11853752.1
(22) Date of filing: 26.11.2011
(51) Int. Cl.: H04J 14/00

(54) **METHOD FOR ESTABLISHING PATH IN WAVELENGTH DIVISION NETWORK, COMMUNICATION NODE AND COMMUNICATION SYSTEM**

(30) Priority: 31.12.2010 CN 201010624673
(71) Applicant: Huawei Technologies Co., Ltd., Shenzhen, Guangdong 518129 (CN)
(72) Inventor: SUN, Jun, Shenzhen Guangdong 518129 (CN); WU, Chuanjun, Shenzhen Guangdong 518129 (CN)
(74) Representative: Maiwald Patentanwalts GmbH
(86) International application number: PCT/CN2011/083006
(87) International publication number: WO 2012/088978

(57) **Abstract**

The present invention discloses a method for establishing a path in a wavelength division network, a communication node, and a communication system. The method includes: establishing, by a source node, a first path to a sink node; receiving, by the source node, failure information from an intermediate node on the first path, where the failure information includes information of an available wavelength of an egress link of the intermediate node, and the egress link has no wavelength consistency with an upstream link of the intermediate node on the first path; and computing, by the source node, a second path to the sink node according to the information of the available wavelength of the egress link of the intermediate node. In the present invention, in a service path establishment process, if discovering that the link has no available wavelength resources, the intermediate node returns to the source node detailed information of an available wavelength that causes path blockage. Therefore, the source node can compute a new path by using the information of the available wavelength, thereby reducing the service blockage rate.

## Description

### TECHNICAL FIELD

The present invention relates to the field of communications technologies, and in particular, to a method for establishing a path in a wavelength division network, a communication node, and a communication system.

### BACKGROUND

In the wavelength division network, service path blockage is likely to be caused due to inconsistency of wavelengths on a path, that is, the links on the path do not have a consistent available wavelength.

In technical solutions in the prior art, during path establishment by a source node, information of a wavelength used by a path is not determined for route computation. A path available wavelength set is carried over signaling, and transferred hop-by-hop along a route direction. At each hop, an intersection is computed between the path available wavelength set and an available wavelength set of a next-hop link. Finally, a sink node receives an end-to-end path available wavelength set, and selects a wavelength for the path from the wavelength set. In the path establishment process, if it is discovered that a path available wavelength set of an intermediate node on the path along a downstream direction is null, link failure information is returned to a head node. The head node, by using the failure information, bypasses the failed link and re-computes the path through a CrankBack mechanism. The CrankBack technology refers to a signaling mechanism where a resource-blocked node initiates a request for finding a new route to a source node of a service in the case of resource blockage, such as a link failure, or a node failure, in the path establishment process.

However, according to the technical solutions in the prior art, during the process of finding of a new route, a blocked link is bypassed as a failed link. This may cause a failure in path query, thereby resulting in service blockage. For example, during establishment of a service path from a source node to a sink node, if it is discovered that the downstream link has no common available wavelength with an upstream path thereof, information indicating link unavailability is returned. The source node starts the CrankBack mechanism, excludes the link, and re-computes the path; and if the path computation fails, the service is blocked. However, the link may be still used. To be specific, other valid paths including the link may exist in the network. However, in the prior art, the path fails to be found, resulting in service blockage. In the technical solutions in the prior art, a valid path between nodes may fail to be established due to neglect, thereby causing higher risks of service blockage.

### SUMMARY

The present invention provides a method for establishing a path in a wavelength division network, a communication node, and a communication system. When service path establishment fails, information of an available wavelength is fed back to a source node, so that the source node can compute a new path, thereby reducing the service blockage rate.

The present invention provides a method for establishing a path in a wavelength division network, including:
establishing, by a source node, a first path to a sink node;
receiving, by the source node, failure information from an intermediate node on the first path, where the failure information includes information of an available wavelength of an egress link of the intermediate node, and the egress link has no wavelength consistency with an upstream link of the intermediate node on the first path; and
computing, by the source node, a second path to the sink node according to the information of the available wavelength of the egress link of the intermediate node.

The present invention further provides a communication node, including:
an establishing module, configured to establish a first path to a sink node;
a receiving module, configured to receive failure information from an intermediate node on the first path; and
a computing module, configured to compute a second path to the sink node according to information of an available wavelength of an egress link of the intermediate node; where the failure information includes the information of the available wavelength of the egress link of the intermediate node, and the egress link has no wavelength consistency with an upstream link of the intermediate node on the first path.

The present invention further provides a wavelength division network communication system, including at least three nodes, and applied to establish the path from a source node to a sink node, where
the source node on the path is configured to: during establishment of a first path to the sink node, if receiving failure information of an intermediate node on the first path, compute a second path to the sink node according to information of an available wavelength of an egress link of the intermediate node, where the failure information includes the information of the available wavelength of the egress link of the intermediate node, and the egress link has no wavelength consistency with an upstream link of the intermediate node on the first path; and
the intermediate node on the first path is configured to send the failure information to the source node when it is detected that the egress link has no wavelength consistency with the upstream link on the first path.

In the present invention, in a service path establishment process, if discovering that the link has no available wavelength resources, the intermediate node returns to the source node detailed information of an available wavelength that causes path blockage. Therefore, the source node can compute a new path by using the information of the available wavelength, thereby reducing the service blockage rate.

### BRIEF DESCRIPTION OF DRAWINGS

FIG. 1 is a flowchart of a method for establishing a path in a wavelength division network provided in an embodiment of the present invention;

FIG. 2 is a flowchart of a method for establishing a path in a wavelength division network provided in an embodiment of the present invention;

FIG. 3 is a topological structure diagram of a wavelength division network provided in an embodiment of the present invention; and

FIG. 4 is a schematic structural diagram of a communication node provided in an embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

In the wavelength division network in the prior art, in the case of an establishment failure of a path from a source node to a sink node, a valid path cannot be established according to the wavelength information of the link, thereby causing service blockage. In view of such problem present in the wavelength division network, the present invention, by delicately analyzing the cause to the path establishment failure, informs the link failure cause (for example, there is no common available wavelength, or link wavelengths in the path are inconsistent) to the failure in service establishment, and meanwhile provides the information of the available wavelength. The source node, during CrankBack, will not completely exclude the link any more, but conditionally uses the link by using the information of the available wavelength of the link returned from the CrankBack. In this way, a valid path may not be lost, and the service blockage rate is therefore reduced.

In the technical solutions of the present invention, when a link from a source node to a sink node on the path in a wavelength division network fails to be established, if the failure is caused by the problem of wavelength consistency, an intermediate node finding the problem notifies the source node of the failure of path establishment, and notifies that the cause to blockage is that an egress link of the intermediate node has no wavelength consistency with an upstream link of the intermediate node, where the egress link refers to all links of the node that are led to the sink node; the upstream link refers to a link on the path from the source node to the intermediate node; "no wavelength consistency" refers to no consistent available wavelength on the egress link of the intermediate node and the upstream link of the intermediate node.

Meanwhile, the failure information further provides information of an available wavelength of the egress link of the intermediate node. The source node, after receiving the path establishment failure message, firstly excludes the egress link of the intermediate node and then re-computes the service path, if the path re-computation fails, the link is determined as a key link, and the source node does not exclude the link any more, but determines an available link of the source node, by using an available wavelength of the link, for re-computation. If the path re-computation succeeds, the source node of the service restarts a path establishment process.

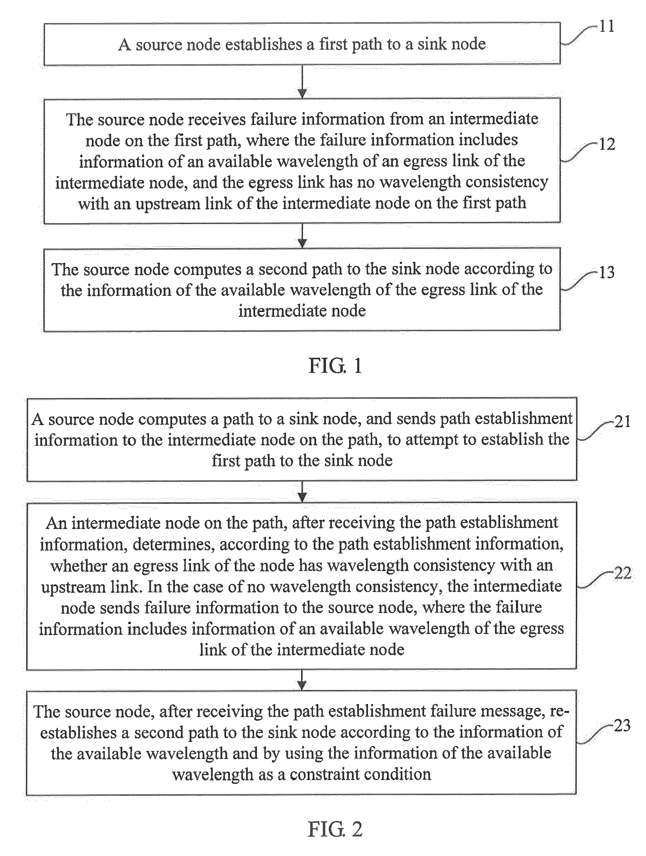

FIG. 1 is a flowchart of a method for establishing a path in a wavelength division network provided in a first embodiment of the present invention, including:

Step 11: A source node establishes a first path to a sink node.

The source node, in initial establishment of a path to the sink node, pre-computes the path, and then attempts to establish a path connection.

Step 12: The source node receives failure information from an intermediate node on the first path, where the failure information includes information of an available wavelength of an egress link of the intermediate node, and the egress link has no wavelength consistency with an upstream link of the intermediate node on the first path.

In this embodiment, if detecting a failure of path establishment due to wavelength inconsistency on an intermediate node of a path that is preset in the path establishment process, the intermediate node sends failure information to a source node, to notify the source node that an egress link of the intermediate node has no wavelength consistency with an upstream link of the intermediate node, and a path needs to be re-established. The failure information includes the information of the available wavelength of the egress link of the intermediate node, so that the source node can compute a new path to the sink node according to the information of the available wavelength.

Step 13: The source node computes a second path to the sink node according to the information of the available wavelength of the egress link of the intermediate node.

In this embodiment, a path to the sink node may be re-established in the following two manners:

Manner 1: The source node selects an egress link of the source node according to the information of the available wavelength of the egress link of the intermediate node, where the egress link of the source node has a consistent wavelength with the egress link of the intermediate node. That is, the source node determines the egress link and the consistent wavelength by using the information of the available wavelength as a constraint condition, and establishes a new second path according to the egress link and the consistent wavelength.

If the information of the available wavelength of the intermediate node is a wavelength set {1, 2, 3, 4}, the source node determines the egress link of the source node according to the wavelength set {1, 2, 3, 4}, and the wavelength on the egress link of the source node may have an intersection with the wavelength set {1, 2, 3, 4}. If a link from the source node to a node uses a wavelength set {1, 2, 5, 6, 8}, the node may be used as the next node of the source node. If a link from the source node to a node uses a wavelength set {5, 6, 7}, the node cannot be used as the next node of the source node. Description is given by using the intersection {1, 2} between the egress link of the source node and the wavelength set {1, 2, 3, 4} as an example. After determining the egress link of the source node, and the consistent wavelength between the egress link of the source node and the egress link of the intermediate node, the source node may re-compute a new path to the sink node. That is, a new second path is re-computed by using a wavelength set {1, 2} and according to the egress link of the source node.

Manner 2: the source node selects an egress link of the source node according to the information of the available wavelength of the egress link of the intermediate node, where the egress link of the source node has a consistent wavelength with the egress link of the intermediate node. The source node instructs a downstream node of the egress link of the source node to compute, according to the consistent wavelength, a second path to the sink node to establish a new path to the sink node by using hop-by-hop route computation and through a downstream path of the source node. The source node may instruct the downstream node by sending path establishment information, where the path establishment information includes the consistent wavelength, so that the downstream node establishes a second path according to the consistent wavelength.

Manner 2: The source node does not re-compute the path, but determines the next node of the source node, hereinafter referred to as a node 2, by using the consistent wavelength (hereinafter referred to as a consistent wavelength 1) between the egress link of the source node and the egress link of the intermediate node. A new path is established by using the node 2 and each downstream node. The node 2, after receiving the instruction from the source node, determines the egress link of the node 2 according to the consistent wavelength 1, and the wavelength used by the egress link of the node 2 has an intersection, that is a consistent wavelength 2, with the consistent wavelength 1. The node 2 determines its next node (hereinafter referred to as a node 3) according to the egress link and the consistent wavelength 2, and the node 3 continues to establish a path to the sink node in the hop-by-hop manner according to the consistent wavelength 2; other intermediate nodes establish a path to the sink node in the same manner mentioned above, thereby establishing the path to the sink node step by step.

In this embodiment, in a service path establishment process, if discovering that the link has no available wavelength resources, the intermediate node returns to the source node the failure cause to service path blockage and detailed information of an available wavelength that causes path blockage. Therefore, the source node can compute a new path by using the information of the available wavelength, thereby avoiding service path blockage.

FIG. 2 is a flowchart of a method for establishing a path in a wavelength division network provided in a second embodiment of the present invention, including:

Step 21: A source node computes a path to a sink node, and sends path establishment information to an intermediate node on the path, to attempt to establish a first path to the sink node.

The source node computes a service path according to a service constraint condition, for example, computes the optimal path according to the method for optimal path computation in the prior art. If the computation fails, failure information is directly returned. After the service path from the source node to the sink node is computed, the source node starts the process of path establishment, and sends path establishment information to the downstream node, where the path establishment information carries wavelength sets of all links starting from the source node, and complete service path information.

Step 22: The intermediate node on the path, after receiving the path establishment information, determines, according to the path establishment information, whether an egress link of the node has wavelength consistency with an upstream link. In the case of no wavelength consistency, the intermediate node sends failure information to the source node, where the failure information includes information of an available wavelength of the egress link of the intermediate node.

The intermediate node on the service path, after receiving the path establishment information, determines available resources on the path, and determines whether the egress link of the node has wavelength consistency with the upstream link. In the case of no wavelength consistency, the intermediate node notifies the source node of the service of the path establishment failure, and returns an error on wavelength consistency and information of an available wavelength of the current egress link. For example, if an available wavelength set of a link from the source node to an intermediate node is {1, 2, 3}, and a wavelength set of the egress link of the intermediate node is {4, 5}, the intermediate node determines that no consistent wavelength is available, and returns failure information to the source node.

It should be noted that, if the intermediate node detects that wavelength consistency exists, for example, if an available wavelength set of a link from the source node to the intermediate node is {1, 2, 3}, and a wavelength set of the egress link of the intermediate node is {4, 5}, the intermediate node reserves related resources, obtains a consistent wavelength {2, 3} between the egress link and the upstream link, and meanwhile forwards an updated signaling message to the downstream node along the path direction, where the updated signaling message includes the consistent wavelength, for example, the wavelength set {2, 3}. All other nodes are subject to the same manner. If a consistent wavelength exists, the path to the sink node is established successfully.

Step 23: The source node, after receiving the path establishment failure message, re-establishes a second path to the sink node according to the information of the available wavelength and by using the information of the available wavelength as a constraint condition.

If the source node receives failure information of an intermediate node, and the cause to the failure is "an error on wavelength consistency", the source node does not exclude the egress link of the intermediate node, but conditionally uses the link, that is, during the path computation process, determines whether wavelengths used by other known links have possibility to be consistent under the restraint of information of an available wavelength of the egress link. If a consistent wavelength is available, the source node does not exclude the link. The source node, if successfully re-computing the path, starts the signaling process.

If the path computed by the source node using information of the available wavelength of the egress link of the intermediate node has no wavelength consistency, the egress link of the intermediate node is not selected, but other links are selected for re-computation. If the computation still fails, the service path computation failure is returned and the service is therefore blocked.

Alternatively, by hop-by-hop forwarding, the source node determines the egress link of the source node and the consistent wavelength between the egress link of the source node and the egress link of the intermediate node according to the information of the available wavelength of the intermediate node. The next node of the source node is instructed to establish the link to the sink node according to the consistent wavelength. The next node further establishes a link from the node to a next node according to the consistent wavelength, and the consistent wavelength is forwarded to a downstream node step by step. This manner can keep the source node free from path computation, thereby reducing burden on computation, but may reduce path establishment efficiency.

After successful path establishment, the sink node of the service, after receiving path establishment information, determines available resources on the path. If the check is successful, and a consistent available wavelength exists, the sink node selects a wavelength to be used from a consistent available wavelength set to establish service crossing, and sends a service establishment acknowledgment message to an upstream node. The upstream node uses the wavelength selected by the sink node to further send the service establishment acknowledgment message to an upstream node of the node, until the source node of the service. The source node of the service, after receiving the service establishment acknowledgment message, uses the wavelength selected by the sink node to transmit data on the established path according to the received acknowledgment message.

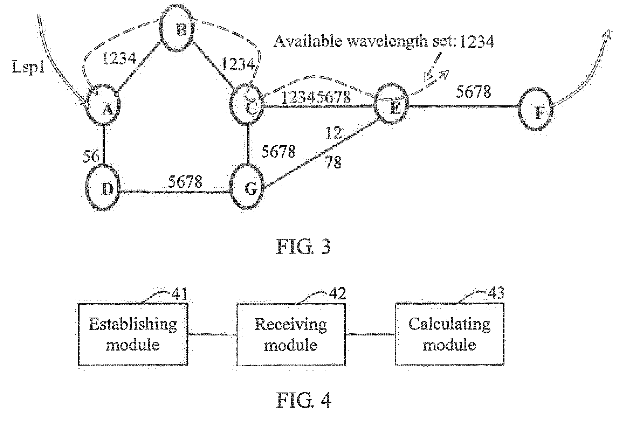

The following gives detailed description of the method for establishing a path in a wavelength division network with reference to specific application scenarios. The following uses the network topology view shown in FIG. 3 as an example to describe the method for establishing a path from the source node to the sink node. As shown in FIG. 3, it is assumed that, a service path from a node A to a node F needs to be established, and a digit on a link is information of an available wavelength of the link, for example, digits 1234 on a link from the node A to a node B represent that the available wavelength set of the link is {1, 2, 3, 4}: the method for establishing a path is as follows:

1. The source node A of the service computes a service path from the node A to the node F, and obtains an optimal service path as ABCEF; the source node A sends path establishment information to the downstream node B, where the information includes the downstream node information BCEF of the service path, and available wavelength set information {1, 2, 3, 4} by now.

2. The node B, after receiving the service path establishment information, detects the available wavelength set information, and if a consistent wavelength exists, transfers the path establishment information to a downstream node C, where the information includes updated service routing CEF and the available wavelength set information {1, 2, 3, 4}; the downstream node C performs similar processing, and then transfers the service path establishment information to a node E.

3. The node E, after receiving the service path establishment information, detects whether a consistent available wavelength exists. In the case of no consistent available wavelength, the Node E sends a path establishment failure message to the source node A of the service, returns the failure cause "no consistent wavelength", and meanwhile carries information of an available wavelength set {5, 6, 7, 8} that causes link blockage.

4. The source node A, after receiving the path establishment failure message, excludes the link that causes a path establishment failure and re-computes the path. If the re-computation fails, the link is a key link because the cause to the failure is "no consistent available wavelength". Therefore, the source node A does not exclude the link any more, but determines an available egress link of the source node by using returned information of an available wavelength of the node E, to exclude the egress link of the source node A that has no consistent wavelength. In this embodiment, the path AB is excluded, and the final service path after re-computation is ADGCEF. The source node A restarts the path establishment process.

In the foregoing embodiment, if the path establishment fails, a new path is established by excluding a failed path, until the path is established successfully or until the path is determined to be blocked. In addition to the foregoing manner, if the path establishment fails, the link of an available wavelength may further be used to establish a path by hop-by-hop routing. That is, links are established one by one according to the available wavelength from the source node, until to establish the path to the sink node.

The hop-by-hop path establishment manner is as follows. Description is given by still using the network topology diagram shown in FIG. 3 as an example. It is assumed that a wavelength service path from the node A to the node F needs to be established. The hop-by-hop path establishment method is as follows:

1. The source node A of the service computes a service path from the node A to the node F, and obtains an optimal service path as ABCEF; the source node A sends path establishment information to the downstream node B, where the information includes detailed downstream service path information BCEF and available wavelength set information {1, 2, 3, 4} by now.

2. The node B, after receiving the service path establishment information, detects the available wavelength set information, and if a consistent wavelength exists, transfers the path establishment information to the downstream node C, where the information includes updated service routing CEF and the available wavelength set information {1, 2, 3, 4}; the downstream node C performs similar processing, and then transfers the service path establishment information to the node E.

3. The node E, after receiving the service path establishment information, detects whether a consistent available wavelength exists. In the case of no consistent available wavelength, the node E sends a path establishment failure message to the source node A of the service, returns the failure cause "no consistent wavelength", and meanwhile carries information of an available wavelength set {5, 6, 7, 8} that causes link blockage.

4. The source node A, after receiving the path establishment failure message, establishes a path by hop-by-hop routing by using the available wavelength set {5, 6, 7, 8} as an initial value and a constraint condition as the path available wavelength set. Firstly, the node A computes a route from the node A to the tail node F by using the available wavelength set {5, 6, 7, 8} as a constraint condition, but only using the next hop information in the route. In this embodiment, the node A selects the link A-D as the next hop link; for link update, the node A uses an available wavelength set {5, 6} and sends a signaling message to the downstream node D. The node D, after receiving the signaling message sent by the upstream node A, computes a route from the node D to the tail node F by using the available wavelength set {5, 6} as a constraint condition, but only uses the next hop information in the route. In this embodiment, the node D selects the link D-G as the next hop link; for link update, the node D uses an available wavelength set {5, 6} and sends a signaling message to the downstream node G. The foregoing process is repeated until the signaling reaches the tail node F. The sink node F, after receiving the service establishment message, has a path available wavelength set {5, 6}. The tail node determines the service wavelength from this set according to specific strategies, such as a wavelength of 5, and then sends an acknowledgment message to the upstream node, until the node A. According to the foregoing process, the final service path established is A-D-G-C-E-F with a wavelength of 5.

In this embodiment, in a service path establishment process, if discovering that the link has no available wavelength resources, the intermediate node returns to the source node the failure cause to service path blockage and detailed information of an available wavelength that causes path blockage. Therefore, the source node can compute a new path by using the information of the available wavelength, thereby avoiding service path blockage.

FIG. 4 is a schematic structural diagram of a communication node provided in an embodiment of the present invention, including:
an establishing module 41, configured to establish a first path to a sink node;
a receiving module 42, configured to receive failure information from an intermediate node on the first path; and
a computing module 43, configured to compute a second path to the sink node according to information of an available wavelength of an egress link of the intermediate node; where the failure information includes the information of the available wavelength of the egress link of the intermediate node, and the egress link has no wavelength consistency with an upstream link of the intermediate node on the first path.

During establishment of the first path, the establishing module 41 is configured to deliver path establishment information to the intermediate node on the first path, to establish the first path.

In this embodiment, during re-establishment of the second path, the source node may establish the second path. The computing module 43 is configured to: select an egress link of the source node according to the information of the available wavelength of the egress link of the intermediate node, where the egress link of the source node has a consistent wavelength with the egress link of the intermediate node; and compute the second path to the sink node according to the egress link of the source node and the consistent wavelength.

Alternatively, by hop-by-hop route computation, after the source node determines the egress link and the consistent wavelength, the downstream node establishes a link to the sink node in the hop-by-hop manner. The computing module 43 is configured to select an egress link of the source node according to information of an available wavelength of the egress link of the intermediate node, where the egress link of the source node has a consistent wavelength with the egress link of the intermediate node; and instruct the downstream node of the egress link of the source node to establish, according to the consistent wavelength, the second path to the sink node.

In this embodiment, in a service path establishment process, if discovering that the link has no available wavelength resources, the intermediate node returns to the source node the failure cause to service path blockage and detailed information of an available wavelength that causes path blockage. Therefore, the source node can compute a new path by using the information of the available wavelength, thereby avoiding service path blockage.

An embodiment of the present invention provides a wavelength division network communication system, including at least two nodes, and applied to establish a path between any two nodes. During establishment of a path in this embodiment, the service initiating node is a source node, the service tail node is a sink node, and the node between the source node and the sink node is an intermediate node.

For any path established in the communication system, the source node thereon is configured to: during establishment of a first path to the sink node, if receiving failure information of an intermediate node on the first path, compute a second path to the sink node according to information of an available wavelength of an egress link of the intermediate node.

The intermediate node is configured to send failure information to the source node when it is detected that the link has no wavelength consistency with an upstream link on the first path, where the failure information includes the information of the available wavelength of the egress link of the intermediate node, and the egress link has no wavelength consistency with an upstream link of the intermediate node on the first path.

During the establishment of the first path, the source node delivers path establishment information to the intermediate node on the first path, to establish the first path.

In examples of this embodiment, during establishment of a new second path, the source node may establish the second path. To be specific, the source node selects the egress link of the source node according to the information of the available wavelength of the egress link of the intermediate node, where the egress link of the source node has a consistent wavelength with the egress link of the intermediate node; and computes the second path to the sink node according to the egress link of the source node and the consistent wavelength.

Alternatively, the by hop-by-hop routing manner may also be used. To be specific, the source node is configured to: use the information of the available wavelength as a constraint condition; select the egress link of the source node according to the information of the available wavelength of the egress link of the intermediate node, where the egress link of the source node has a consistent wavelength with the egress link of the intermediate node; and instruct the downstream node of the egress link of the source node to establish the second path to the sink node according to the consistent wavelength.

For functions of the nodes and interaction between the nodes in the communication system, reference may be made to the disclosure in the embodiment corresponding to FIG. 5, which are not detailed herein any further.

In this embodiment, in a service path establishment process, if discovering that the link has no available wavelength resources, the intermediate node returns to the source node the failure cause to service path blockage and detailed information of an available wavelength that causes path blockage. Therefore, the source node can compute a new path by using the information of the available wavelength, thereby avoiding service path blockage.

Persons of ordinary skill in the art may understand that the accompanying drawings are merely schematic diagrams of embodiments, and modules or processes in the accompanying drawings are not necessarily required for implementing the present invention.

Persons of ordinary skill in the art may understand that modules in the apparatuses provided in the embodiments may be distributed in the apparatuses according to the description of the embodiments, or be correspondingly changed to be disposed in one or multiple apparatuses different from this embodiment. The modules in the foregoing embodiments may be combined into one module, or split into a plurality of sub-modules.

The sequence numbers of the foregoing embodiments of the present invention are merely for description but do not indicate the preference of the embodiments.

Persons of ordinary skill in the art may understand that, all or a part of the steps of the foregoing method embodiments may be implemented by a program instructing relevant hardware. The foregoing program may be stored in a computer readable storage medium. When the program is run, the foregoing steps included in the method embodiments are performed. The foregoing storage medium may be any medium capable of storing program codes, such as a ROM, a RAM, a magnetic disk, or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the spirit and scope of the technical solutions of the embodiments of the present invention.

## Claims

1. A method for establishing a path in a wavelength division network, comprising:
establishing, by a source node, a first path to a sink node;
receiving, by the source node, failure information from an intermediate node on the first path, wherein the failure information comprises information of an available wavelength of an egress link of the intermediate node, and the egress link has no wavelength consistency with an upstream link of the intermediate node on the first path; and
computing, by the source node, a second path to the sink node according to the information of the available wavelength of the egress link of the intermediate node.

2. The method for establishing a path in a wavelength division network according to claim 1, wherein the computing, by the source node, a second path to the sink node according to the information of the available wavelength of the egress link of the intermediate node specifically comprises:
selecting, by the source node, an egress link of the source node according to the information of the available wavelength of the egress link of the intermediate node, wherein the egress link of the source node has a consistent wavelength with the egress link of the intermediate node; and
computing the second path to the sink node according to the egress link of the source node and the consistent wavelength.

3. The method for establishing a path in a wavelength division network according to claim 1, wherein the computing, by the source node, a second path to the sink node according to the information of the available wavelength of the egress link of the intermediate node specifically comprises:
selecting, by the source node, an egress link of the source node according to the information of the available wavelength of the egress link of the intermediate node, wherein the egress link of the source node has a consistent wavelength with the egress link of the intermediate node; and
instructing a downstream node of the egress link of the source node to establish, according to the consistent wavelength, the second path to the sink node.

4. The method for establishing a path in a wavelength division network according to claim 1, wherein the establishing, by a source node, a first path to a sink node specifically comprises
delivering, by the source node, path establishment information to the intermediate node on the first path, to establish the first path.

5. A communication node, comprising:
an establishing module, configured to establish a first path to a sink node;
a receiving module, configured to receive failure information from an intermediate node on the first path; and
a computing module, configured to compute a second path to the sink node according to information of an available wavelength of an egress link of the intermediate node; wherein the failure information comprises the information of the available wavelength of the egress link of the intermediate node, and the egress link has no wavelength consistency with an upstream link of the intermediate node on the first path.

6. The communication node according to claim 5, wherein:
the computing module is configured to: select an egress link of the source node according to the information of the available wavelength of the egress link of the intermediate node, wherein the egress link of the source node has a consistent wavelength with the egress link of the intermediate node; and compute the second path to the sink node according to the egress link of the source node and the consistent wavelength.

7. The communication node according to claim 5, wherein:
the computing module is configured to: select an egress link of the source node according to the information of the available wavelength of the egress link of the intermediate node, wherein the egress link of the source node has a consistent wavelength with the egress link of the intermediate node; and instruct a downstream node of the egress link of the source node to establish, according to the consistent wavelength, the second path to the sink node.

8. The communication node according to claim 5, wherein:
the establishing module is configured to deliver path establishment information to the intermediate node on the first path, to establish the first path.

9. A wavelength division network communication system, comprising at least three nodes, and applied to establish a path from a source node to a sink node, wherein:
the source node on the path is configured to: during establishment of a first path to the sink node, if receiving failure information of an intermediate node on the first path, compute a second path to the sink node according to information of an available wavelength of an egress link of the intermediate node, wherein the failure information comprises the information of the available wavelength of the egress link of the intermediate node, and the egress link has no wavelength consistency with an upstream link of the intermediate node on the first path; and
the intermediate node on the first path is configured to send the failure information to the source node when it is detected that the egress link has no wavelength consistency with the upstream link on the first path.

10. The wavelength division network communication system according to claim 9, wherein:
the source node is configured to: select an egress link of the source node according to the information of the available wavelength of the egress link of the intermediate node, wherein the egress link of the source node has a consistent wavelength with the egress link of the intermediate node; and compute the second path to the sink node according to the egress link of the source node and the consistent wavelength.

11. The wavelength division network communication system according to claim 9, wherein:
the source node is configured to: select an egress link of the source node according to the information of the available wavelength of the egress link of the intermediate node, wherein the egress link of the source node has a consistent wavelength with the egress link of the intermediate node; and instruct the downstream node of the egress link of the source node to establish, according to the consistent wavelength, the second path to the sink node.

12. The wavelength division network communication system according to claim 9, wherein:
the node in the communication system is further configured to determine a link to a next node after receiving notification information of path establishment, wherein the link has wavelength consistency with the upstream link.

13. The wavelength division network communication system according to claim 9, wherein:
the source node is configured to deliver path establishment information to the intermediate node on the first path, to establish the first path.
